# EUROPÄISCHE PATENTSCHRIFT

(11) **EP 3 291 395 B1**
(45) Veröffentlichungstag und Bekanntmachung des Hinweises auf die Patenterteilung: **22.08.2018**
(21) Anmeldenummer: 17186015.8
(22) Anmeldetag: 11.08.2017
(51) Int. Cl.: H02G 3/20, F21V 21/04, H02G 3/12

(54) **INSTALLATIONSGERÄT FÜR DIE DECKENMONTAGE**
INSTALLATION BOX FOR CEILING SELECTION
APPAREIL D'INSTALLATION POUR MONTAGE AU PLAFOND

(30) Priorität: 01.09.2016 DE 102016116364
(43) Veröffentlichungstag der Anmeldung: 07.03.2018
(73) Patentinhaber: ABB AG, 68309 Mannheim (DE)
(72) Erfinder: Waibel, Florian, 44799 Bochum (DE); Wiese, Michael, 42897 Remscheid (DE); Lisson, Werner, 58093 Hagen (DE); Ewers, Manfred, 58239 Schwerte (DE)

(56) Entgegenhaltungen:
- EP-A2- 2 523 282
- WO-A1-98/03817
- WO-A1-2008/078081
- FR-A1- 2 978 509
- US-A1- 2015 087 174

## Beschreibung

Die Erfindung betrifft ein Installationsgerät für die Deckenmontage gemäß dem Oberbegriff von Anspruch 1.

In der Gebäudeinstallationstechnik gibt es verschiedene Installationsgeräte wie beispielsweise Bewegungsmelder, Rauchmelder und Lichtquellen etc., die an der Decke eines Raumes montiert werden. Im Falle von Raumdecken, die beispielsweise durch Montieren von Werkstoffplatten, wie z.B. Gipskartonplatten, unterhalb einer tragenden Gebäudedecke aus Beton erstellt werden, befindet sich jenseits der Raumdecke, die nachfolgend als Decke bezeichnet wird, ein hohler Innenraum oder Zwischenraum. Zur Montage wird ein solches Installationsgerät mit seinem einen Ende durch eine Öffnung in der Werkstoffplatte in den Zwischenraum hinein geschoben, bis ein am Installationsgerät geformter flanschartiger Gehäuseabschnitt bündig an der Unterseite der Decke anliegt und der von außen sichtbare Teil des Installationsgerätes sich im Außenraum der Decke befindet.

Aus dem Stand der Technik ist es in diesem Zusammenhang bekannt, dass Installationsgeräte ausschließlich mit Hilfe von federbelasteten Spreizarmen selbstständig an der Decke halten. Die Arme werden bei der Installation des Installationsgeräts in radialer Richtung zusammengedrückt, damit das Installationsgerät durch die vorbereitete Öffnung in der Werkstoffplatte geschoben werden kann. Nachdem der rückwärtige Teil des Installationsgeräts durch die Öffnung geschoben und die flanschartige Erweiterung an der Unterseite der Decke anliegt, spreizen sich die federbelasteten Spreizarme im Hohlraum wieder in radialer Richtung auf und kehren in Richtung ihres Ursprungszustands zurück. Durch die Dicke des plattenförmigen Werkstoffs der Decke werden die Arme daran gehindert, vollständig in ihren Ursprungszustand zurück zu kehren, so dass das Installationsgerät durch die auf der Rückseite der Decke anliegenden federbelasteten Arme an der Decke gehalten wird.

WO 98 03817 A1 oder FR 2 978 509 A1 offenbaren den Oberbegriff des Anspruchs 1. EP 2 523 282 A2 offenbart eine ähnliche mechanische Übertragung, wie für die radial Verklemmung des anspruchgsgemäßen Installationsgeräts benutzt wird.

Die meisten Installationsgeräte für die Deckenmontage werden jedoch mit Leitungsgut wie z.B. elektrischen Stromzuleitungen verbunden, welche eine gewisse Steifigkeit aufweisen. Je nach Dicke, Anzahl und Flexibilität der Leitungen üben diese bei der Montage der Installationsgeräte in einer vorbereiteten Öffnung in der Decke eine Kraft aus, die mitunter größer als die von den Federn erzeugte Haltekraft ist. Hierdurch besteht die Gefahr, dass das Installationsgerät durch die von den Leitungen erzeugte Kraftwirkung aus der Öffnung in der Decke heraus gedrückt wird und der flanschartige Gehäuseabschnitt des Installationsgerätes nicht mehr bündig an der Unterseite der Decke, bzw. der Werkstoffplatte anliegt.

Demgemäß liegt der Erfindung die Aufgabe zugrunde, ein Installationsgerät zu schaffen, welches mit geringem Aufwand in einer vorbereiteten Öffnung einer aus plattenförmigen Werkstoff gebildeten Decke eines Gebäudes montiert werden kann und welches auch beim Anschluss von steifen Zuleitungen stets eine bündige Anlage des Installationsgerätes an der Unterseite der Decke ermöglicht.

Diese Aufgabe wird erfindungsgemäß durch ein Installationsgerät mit den Merkmalen von Anspruch 1 gelöst.

Gemäß der Erfindung umfasst ein Installationsgerät zur Montage in einer vorzugsweise kreisrunden Öffnung einer Decke, die aus einem plattenförmigen Werkstoff, wie z.B. Holz oder Gipskartonplatten gebildet ist, ein Gehäuse, welches einen ersten Gehäuseabschnitt aufweist, der einen geringeren Durchmesser als die Öffnung besitzt, so dass dieser Gehäuseabschnitt mit einem gewissen Spiel von beispielsweise 5 mm in die Öffnung eingeschoben werden kann. Am Gehäuse ist weiterhin ein zweiter flanschartiger Gehäuseabschnitt geformt, der einen gegenüber der Öffnung erweiterten Durchesser aufweist, und der nach dem Einschieben des ersten Gehäuseabschnitts bündig an der Unterseite der Decke anliegt, wenn der erste Gehäuseabschnitt vollständig in die Öffnung eingeschoben ist. Im Bereich des ersten Gehäuseabschnitts sind zwei diametral gegenüberliegende Spreizarme verschwenkbar aufgenommen, die durch federelastische Mittel aus einer radial innenliegenden Einführposition in eine radial erweiterte Spreizposition gedrängt werden. Die Spreizarme sind vorzugsweise aus Federstahldraht gefertigte Drahtbügel, an denen die federelastischen Mittel bevorzugt als an den Spreizarmen geformte spiralfederartige Abschnitte ausgeführt sind.

Die Erfindung zeichnet sich dadurch aus, dass der erste Gehäuseabschnitt eine erste radiale Führung umfasst, in der ein Klemmelement aufgenommen ist, welches in radialer Richtung, d.h. vom Zentrum des im Querschnitt vorzugsweise kreisförmigen ersten Gehäuseabschnitts 8a weg aus einer ersten, radial innenliegenden Freigabeposition in eine zweite radial außenliegende Klemmposition verschoben werden kann. Der erste Gehäuseabschnitt weist weiterhin eine zweite, mit der ersten radialen Führung kommunizierende axiale Führung auf, in der ein Verschiebeelement aufgenommen ist, das durch Verdrehen eines Schraubelements, welches vorzugsweise durch eine im Verschiebeelement geformte Bohrung hindurch geführt ist, im ersten Gehäuseabschnitt 8a in axialer Richtung verschoben werden kann. Am Klemmelement ist eine im Winkel zur Bewegungsrichtung des Verschiebeelements geneigte Gleitfläche und/oder am Versschiebeelement eine im Winkel zur Bewegungsrichtung des Verschiebeelements geneigte Gleitfläche geformt, über welche die vom Schraubelement auf das Verschiebeelement ausgeübte, in axialer Richtung wirkende Kraft in das Klemmelement eingeleitet wird, um dieses bei einer Bewegung des Verschiebeelements in der radialen Führung aus der Freigabeposition in die Klemmposition zu verschieben.

Durch die Erfindung ergibt sich der Vorteil, dass das Installationsgerät nach dem Anschließen der Stromzuleitungen, die hierzu aus der Öffnung herausgezogen werden, durch Zusammendrücken der Spreizarme mit einer Hand in die Öffnung eingeschoben werden kann, bis der flanschartige zweite Gehäuseabschnitt bündig an der Unterseite der Decke anliegt. In dieser Position kann dann mit einem Schraubenzieher das Schraubelement, welches vorzugsweise als eine bekannte Schraube ausgeführt ist, deren Schraubenkopf vom flanschseitigen Ende des Installationsgerätes aus mit einem Schraubenzieher erfasst werden kann, solange in einer ersten Drehrichtung (vorzugsweise im Uhrzeigersinn) gedreht werden, bis das Verschiebeelement das Klemmelement über die Gleitfläche soweit aus der radialen Führung hinaus bewegt hat, bis dessen Enden den Rand der Öffnung erreicht haben und auf den plattenförmigem Werkstoff der Decke treffen. Durch Weiterdrehen des Schraubelements wird das Klemmelement dann solange radial nach außen weiterbewegt, bis dieses mit seinem radial außenliegenden Ende in den Werkstoff, aus welchem die Deckenplatten geformt sind, eindringt. Im Falle von porösen, unelastischen Werkstoffen wie z.B. Gipskartonplatten oder Holz, dringt das außenliegende Ende des Klemmelements formschlüssig in den Werkstoff ein und erzeugt dadurch eine formschlüssige Verbindung zwischen dem Gehäuse 8 und dem Werkstoff, welche das Installationsgerät zuverlässig in der Öffnung fixiert. Bei Decken, die aus elastischen plattenförmigen Werkstoffen wie z.B. Kunststoffplatten gefertigt sind, erfolgt demgegenüber eine kraftschlüssige Fixierung der am Rand der Öffnung anliegenden radial außenliegenden Enden des, bzw. der Klemmelemente, von denen am Installationsgerät bevorzugt zwei vorgesehen sind, die sich diametral gegenüberliegen.

Bei der bevorzugten Ausführungsform der Erfindung ist die Gleitfläche am Klemmelement angeordnet, und in der Gleitfläche ist eine Ausnehmung geformt, durch die sich das Schraubelement hindurch erstreckt. Hierdurch ergibt sich der Vorteil, dass die in axiale Richtung wirkende Kraft, welche beim Anziehen des Schraubelements vom Schraubelement auf das Verschiebeelement ausgeübt wird, zentral in die Gleitfläche eingeleitet wird, wodurch die auf das Klemmelement wirkenden Drehmomente beim Anziehen der Schraubelemente reduziert und die Gefahr eines Verkippens, bzw. Verklemmens des Klemmelements in der radialen Führung verringert wird.

Nach einem weiteren der Erfindung zugrunde liegenden Gedanken ist die Ausnehmung zum Zentrum des ersten Gehäuseabschnitts hin offen und hat in axialer Richtung betrachtet vorzugsweise die Form eines U. Dies führt zu dem Vorteil, dass das Klemmelement bei zurückgezogenem Verschiebeelement von außen her in die radiale Führung eingeschoben werden kann, was den Zusammenbau des erfindungsgemäßen Installationsgerätes erheblich vereinfacht.

Weiterhin ist es in Hinblick auf eine präzise und leichtgängige Führung des Klemmelements in der radialen Führung von Vorteil, wenn die radiale Führung zwei in der Außenwand des ersten Gehäuseabschnitts geformte radiale Nuten besitzt, die sich in radialer Richtung erstrecken und in die zwei auf einander gegenüber liegenden Seiten des Klemmelements angeordnete Vorsprünge eingreifen, die sich vorzugsweise über einen Großteil der Länge des Klemmelements erstrecken.

Nach einem weiteren der Erfindung zugrunde liegenden Gedanken wird das Klemmelement durch federelastische Mittel aus der zweiten Klemmposition in die erste Freigabeposition gedrängt. Die federelastischen Mittel können z.B. Spiraldruck- oder Spiralzugfedern sein, die mit ihrem einen Ende im Inneren des ersten Gehäuseabschnitts 8a befestigt sind und mit ihrem anderen Ende beispielsweise im Bereich der Vorsprünge am Klemmelement angreifen und dieses zum Zentrum des ersten Gehäuseabschnitts drängen. Durch den Einsatz der federelastischen Mittel ergibt sich der Vorteil, dass das Klemmelement und auch das Verschiebeelement sozusagen automatisch wieder in die Freigabeposition zurück gedrängt werden, wenn das Schraubelement durch Drehen (vorzugsweise entgegengesetzt zum Uhrzeigersinn) gelöst wird, um das Installationsgerät zur Demontage aus der Öffnung zu entfernen.

Obgleich prinzipiell die Möglichkeit besteht, lediglich eine Gleitfläche am Klemmelement oder am Verschiebeelement vorzusehen, die beispielsweise mit einer Anlagekante oder einem rippenartigen Vorsprung am anderen Element zusammenwirkt, ist bei der bevorzugten Ausführungsform der Erfindung jeweils eine Gleitfläche am Klemmelement und eine an dieser anliegende Gleitfläche am Verschiebeelement geformt. Hierdurch ergibt sich der Vorteil, dass der Bewegungsweg, um den das Klemmelement innerhalb der radialen Führung verfahren werden kann, erheblich vergrößert wird, da vereinfacht ausgedrückt die Länge beider Gleitflächen zusammen den maximalen Bewegungsweg des Klemmelements bestimmen, um den dieses verschoben wird, und nicht nur die Länge einer einzelnen Gleitfläche.

Bei dieser Ausführungsform der Erfindung ist es von besonderem Vorteil, wenn die Gleitfläche des Klemmelements und die Gleitfläche des Verschiebelements aufeinander abgestimmte Neigungen aufweisen, derart, dass die beiden Gleitflächen parallel zueinander verlaufen, wenn diese aneinander anliegen und die Summe der Neigungswinkel zusammen vorzugsweise 90° beträgt. Besonders bevorzugt weisen hierzu beide Gleitflächen einen Neigungswinkel von 45° relativ zur Bewegungsrichtung des Verschiebeelements, bzw. des Klemmelements auf.

Alternativ weist die Gleitfläche des Verschiebeelements einen Neigungswinkel von 30° relativ zur Bewegungsrichtung des Verschiebeelements auf und das Klemmelement weist einen Neigungswinkel von 60° relative zur Bewegungsrichtung des Klemmelements auf. Diese Ausführungsform hat den Vorteil, dass sehr große Klemmkräfte erzeugt werden können.

In gleicher Weise wie die radiale Führung umfasst auch die axiale Führung zwei in der Wand der Führung geformte axiale Nuten, die sich in axialer Richtung erstrecken und in die zwei auf einander gegenüber liegenden Seiten des Verschiebeelements angeordnete Vorsprünge eingreifen, die sich vorzugsweise über einen Großteil der Länge des Verschiebeelements erstrecken.

Nach einem weiteren der Erfindung zugrunde liegenden Gedanken ist in der Gleitfläche des Verschiebeelements eine sich in axialer Richtung des ersten Gehäuseabschnitts erstreckende Bohrung geformt, durch die sich das Schraubelement hindurch erstreckt. Bei der zuvor erwähnten Ausführungsform, bei welcher in der Gleitfläche des Klemmelements eine Ausnehmung geformt ist, erstreckt sich das Schraubelement bevorzugt gleichzeitig durch die einander fluchtenden Öffnungen der Ausnehmung sowie der Bohrung hindurch. Hierdurch ergibt sich der Vorteil, dass die vom Schraubelement auf das Verschiebeelement ausgeübte Axialkraft über die Zentren der beiden Gleitflächen vom Verschiebeelement in das Klemmelement eingeleitet wird, was zu einer effizienten Nutzung des von der axialen und radialen Führung eingenommenen Bauraums innerhalb des ersten Gehäuseabschnitts führt.

Weiterhin kann es vorgesehen sein, dass das Schraubelement mit seinem freien Gewindeabschnitt in den Innengewindeabschnitt, beispielsweise eines in der Aufsicht polygonalen, bevorzugt rechteckigen Halteelements eingreift, welches bevorzugt in eine der Außenwand des ersten Gehäuseabschnitts geformten radialen Ausnehmung eingeschoben wird und in dieser über die Ränder der Ausnehmung verdrehsicher in dieser gehalten wird. Durch das Vorsehen eines solchen Innengewindeabschnittes, welcher fluchtend zu der sich in axialer Richtung erstreckenden Bohrung im Verschiebeelement angeordnet ist, ergibt sich der Vorteil, dass das Schraubelement beim Einsetzen des erfindungsgemäßen Installationsgerätes automatisch gegen ein Herausfallen aus dem Gehäuse gesichert wird und sich eine Bewegung in axialer Richtung ergibt.

Schließlich weist bei der bevorzugten Ausführungsform der Erfindung der erste Gehäuseabschnitt eine der radialen Führung diametral gegenüberliegende weitere radiale Führung auf, in der ein weiteres Klemmelement in radialer Richtung verschiebbar aufgenommen ist. Im Gehäuseabschnitt ist bei dieser Ausführungsform weiterhin eine mit der weiteren radialen Führung kommunizierende weitere axiale Führung geformt, in welcher ein weiteres Verschiebeelement aufgenommen ist, dass über ein auf dieses wirkendes weiteres Schraubelement im ersten Gehäuseabschnitt in axialer Richtung verschiebbar geführt ist. Am weiteren Klemmelement und/oder am weiteren Versschiebeelement ist ferner eine im Winkel zur Bewegungsrichtung des weiteren Verschiebeelements geneigt angeordnete weitere Gleitfläche geformt, über welche eine vom weiteren Schraubelement auf das weitere Verschiebeelement ausgeübte Kraft in das weitere Klemmelement eingeleitet wird, um dieses bei einer Bewegung des Verschiebeelements in der ersten radialen Führung aus der Freigabeposition in die Klemmposition zu verschieben. Durch das vorsehen von zwei Klemmelementen, die diametral gegenüberliegend in der radialen Führung sowie der weiteren radialen Führung geführt sind, ergibt sich der Vorteil, dass der Klemmweg, welcher bei gleichem Öffnungsdurchmesser zum Festklemmen des Installationsgerätes in der Öffnung zur Verfügung steht, verdoppelt wird. Zudem werden die Klemmkräfte durch die diametrale Anordnung der beiden Klemmelemente von einander gegenüberliegenden Seiten aus zentral in das Gehäuse eingeleitet, was es ermöglicht, dass das Gehäuse des erfindungsgemäßen Installationsgerätes durch ein entsprechendes Herein- oder Herausdrehen der beiden Schraubelemente im Zentrum der Öffnung positioniert werden kann.

Die Erfindung wird nachfolgend mit Bezug auf die Zeichnungen anhand einer bevorzugten Ausführungsform beschrieben.

In den Zeichnungen zeigen
- Fig. 1: eine schematische Explosionsdarstellung eines erfindungsgemäßen Installationsgerätes,
- Fig. 2: eine schematische Querschnittsansicht des Installationsgerätes im eingebauten Zustand, bei welchem sich die Klemmelemente in der Klemmposition befinden und mit ihren Enden am Rand der Öffnung anliegen,
- Fig. 3: eine schematische seitliche Aufsicht auf das Installationsgerät, bei welchem sich die Klemmelemente in der Einführposition befinden,
- Fig. 4: eine Aufsicht auf das Installationsgerät mit aufgesetzter Abdeckkappe und Blendrahmen,
- Fig. 5: eine Seitenansicht des Installationsgerätes mit aufgesetzter Abdeckkappe und Blendrahmen im nicht montierten Zustand,
- Fig. 6: eine schematische Darstellung des in der Öffnung vormontierten Installationsgeräts, bei welchem sich die Klemmelemente in der Einführposition befinden und das Gehäuse allein durch die Spreizarme an der Deckenplatte gehalten wird,
- Fig. 7: eine schematische Aufsicht auf das Gehäuse einer weiteren Ausführungsform eines erfindungsgemäßen Installationsgerätes, bei welchem die Klemmelemente an die Öffnungen gedrängt werden,
- Fig. 8: eine schematische Aufsicht auf das Gehäuse des Installationsgerätes, bei welchem die federelastische Mittel zum Rückstellen der Klemmelemente als lediglich schematisch angedeutete Zugfedern ausgestaltet sind, und
- Fig. 9a, b: eine schematische Detailansicht des Verschiebeelements und Klemmelements.

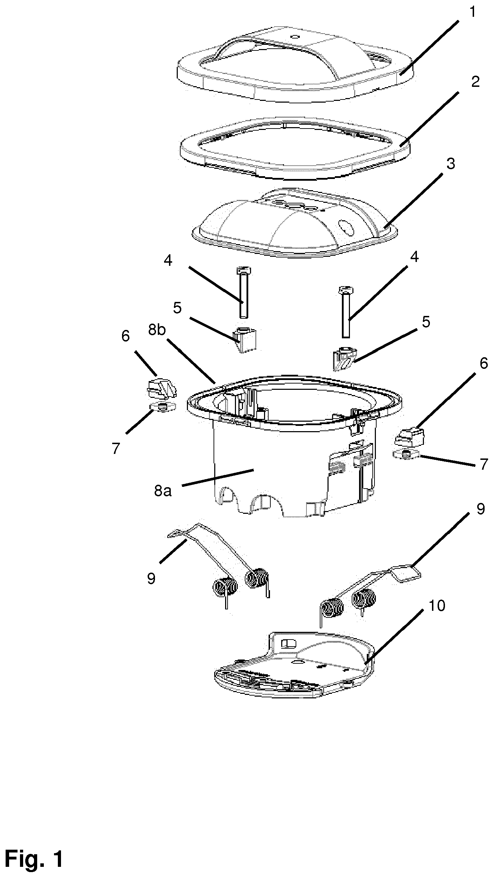

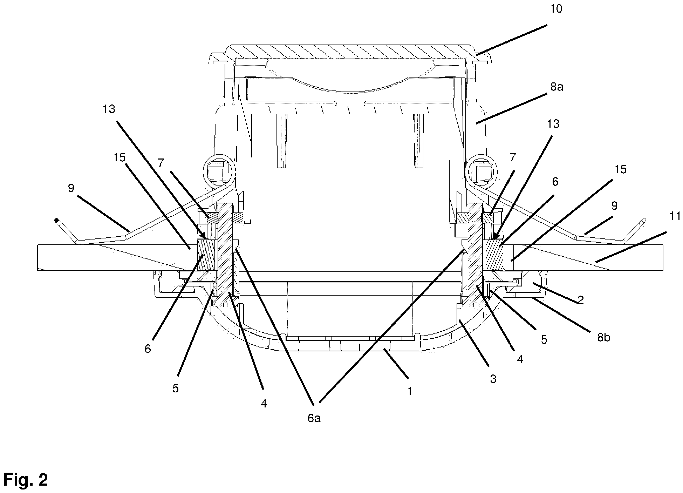

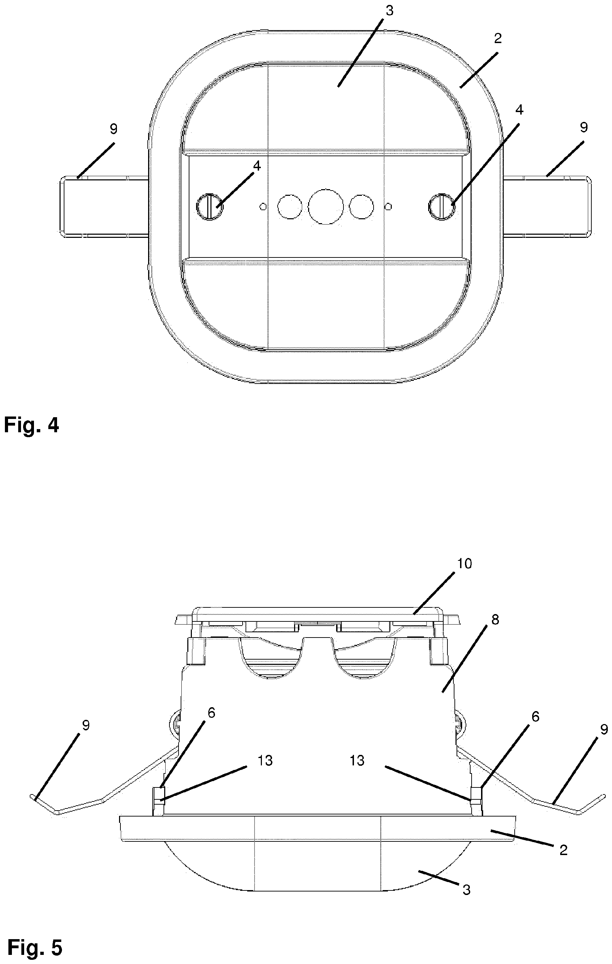

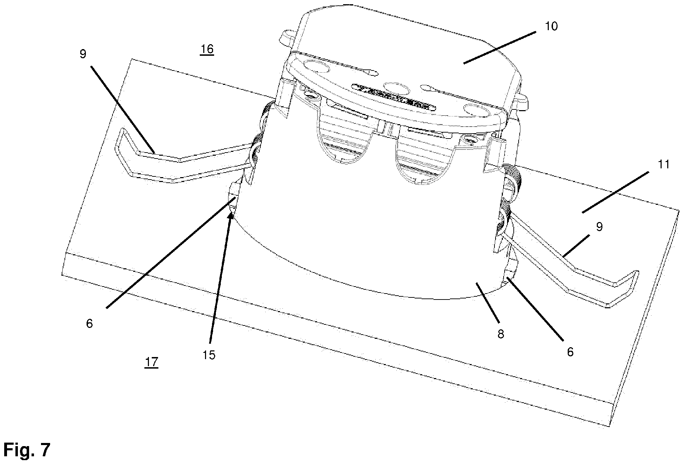

Wie in den Figuren 1 bis 9 gezeigt ist, umfasst ein Installationsgerät zur Montage in einer nur ausschnittsweise gezeigten Öffnung 15 einer Decke 11, die aus einem plattenförmigen Werkstoff, wie z.B. Holz oder Gipskartonplatten oder auch Kunststoffplatten gebildet ist und einen Innenraum 16 sowie einen Außenraum 17 aufweist, ein Gehäuse 8, welches einen ersten Gehäuseabschnitt 8a aufweist, der einen geringeren Durchmesser als die Öffnung 15 besitzt. Am Gehäuse 8 ist weiterhin ein zweiter flanschartiger Gehäuseabschnitt 8b geformt, der einen gegenüber der Öffnung 15 erweiterten Durchesser aufweist, und der nach dem Einschieben des ersten Gehäuseabschnitts 8a in die Öffnung 15 bündig an der Unterseite der Decke 11 anliegt, wenn der erste Gehäuseabschnitt 8a - wie in Fig. 2 gezeigt - vollständig in die Öffnung 15 eingeschoben ist. Im Bereich des ersten Gehäuseabschnitts 8a sind zwei diametral gegenüberliegende Spreizarme 9 verschwenkbar befestigt, die durch federelastische Mittel in Form der nicht näher bezeichneten Spiralfeder aus einer radial innenliegenden Einführposition in eine in Fig. 2 gezeigte radial erweiterte Spreizposition gedrängt werden.

Wie aus der Explosionsdarstellung der Figur 1 entnommen werden kann, werden auf den zweiten flanschartigen Gehäuseabschnitt 8b nacheinander eine z.B. als Linse oder Streuscheibe ausgestaltete, den Innenraum des Gehäuses 8 abdeckende Abdeckkappe 3, ein auf diese aufgesetztes Befestigungselement 2 in Form eines umlaufenden Rahmens sowie vorzugsweise noch ein die Abdeckkappe 3 und das Befestigungselement 2 überspannendes Designelement 1 aufgesetzt, wobei die konkrete Ausführung der zuletzt genannten Bauteile lediglich beispielhaft ist und in Abhängigkeit von der Funktion des Installationsgerätes auch anders gewählt sein kann. Auf den ersten Gehäuseabschnitt 8a kann weiterhin noch eine Zugentlastung 10 für die elektrischen Zuleitungen aufgesetzt werden, welche in den Figuren ebenfalls schematisch angedeutet ist, wobei die konkrete Ausführung der zuletzt genannten Bauteile lediglich beispielhaft ist und in Abhängigkeit von der Funktion des Installationsgerätes auch anders gewählt sein kann.

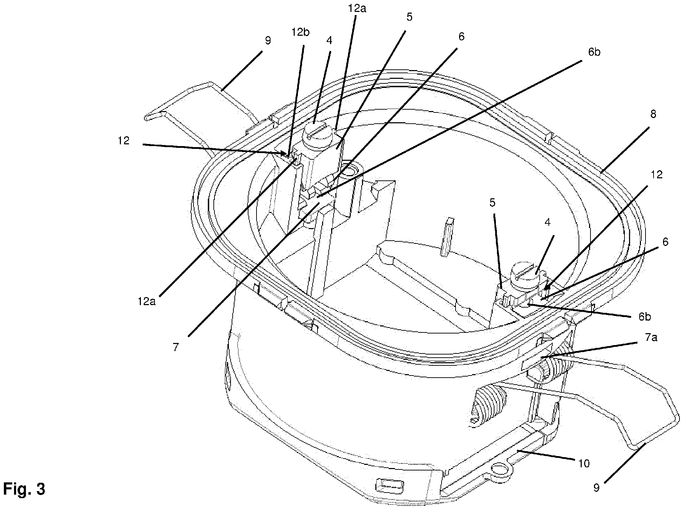

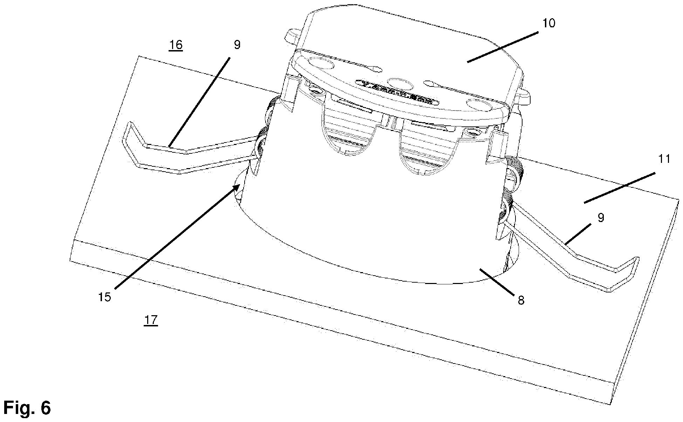

Der erste Gehäuseabschnitt 8a umfasst eine erste radiale Führung 13, in der ein Klemmelement 6 aufgenommen ist, welches in radialer Richtung, d.h. vom Zentrum des ersten Gehäuseabschnitts 8a weg aus einer in Fig. 3 und 6 gezeigten radial innenliegenden Freigabeposition in eine in Fig. 2, 5 und 7 gezeigte radial außenliegende Klemmposition verschoben werden kann. Der erste Gehäuseabschnitt 8a weist weiterhin eine zweite axiale Führung 12 auf, in der ein Verschiebeelement 5 aufgenommen ist, das durch Verdrehen eines Schraubelements 4, welches durch eine im Verschiebeelement 5 geformte Bohrung 5b hindurchgreift, im ersten Gehäuseabschnitt 8a in axialer Richtung verschoben werden kann.

Wie weiterhin den Darstellungen der Figuren 1, 2 sowie 9a und 9b entnommen werden kann, ist am Klemmelement 6 eine im Winkel zur Bewegungsrichtung des Verschiebeelements 5 geneigte Gleitfläche 6a und am Versschiebeelement 5 eine im Winkel zur Bewegungsrichtung des Verschiebeelements 5 geneigte Gleitfläche 5a geformt, über welche die vom Schraubelement 4 auf das Verschiebeelement 5 ausgeübte, in axialer Richtung wirkende Kraft in das Klemmelement 6 eingeleitet wird, um dieses bei einer Bewegung des Verschiebeelements 5 in der radialen Führung aus der Freigabeposition in die Klemmposition zu verschieben.

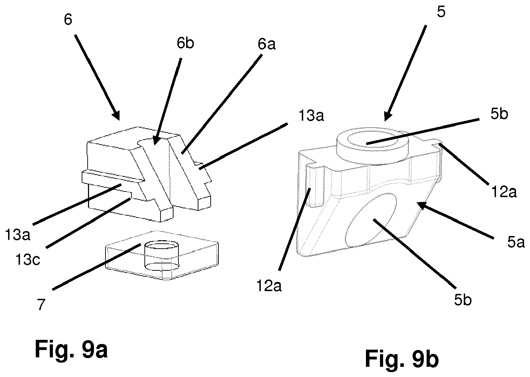

Gemäß der Darstellung der Fig. 9a ist bei der bevorzugten Ausführungsform der Erfindung in der Gleitfläche 6a des Klemmelements 6 eine Ausnehmung 6b geformt; und in der Gleitfläche 5a des Verschiebeelements 5 ist eine als Bohrung ausgeführte Ausnehmung 5b geformt, durch die sich das Schraubelement 4, wie in Fig. 2 gezeigt, hindurch erstreckt.

Um eine zuverlässige Führung des Klemmelements 6 innerhalb radialen Führung 13 zu gewährleisten, sind (siehe Fig. 9a) am Klemmelement 6 zwei Vorsprünge 13a angeordnet, die in zwei in der Außenwand des ersten Gehäuseabschnitts geformte, radiale Nuten 13b eingreifen. In gleicher Weise sind am Verschiebeelement 5 zwei in Fig. 3 angedeutete Vorsprünge 12a geformt, die in zwei axialen Nuten 12b der axialen Führung 12 im Innenraum des ersten Gehäuseabschnitts 8a eingreifen.

Wie weiterhin der Darstellung der Fig. 2 und 9a entnommen werden kann, gereift das Schraubelement 4 mit seinem freien Gewindeabschnitt in den Innengewindeabschnitt, beispielsweise eines in der Aufsicht polygonalen, bevorzugt rechteckigen Halteelements 7 ein, welches z.B. als rechteckige Mutter ausgeführt sein kann, welche bevorzugt in einer radialen Ausnehmung 7a in der Außenwand des ersten Gehäuseabschnitts 8a verdrehsicher aufgenommen ist.

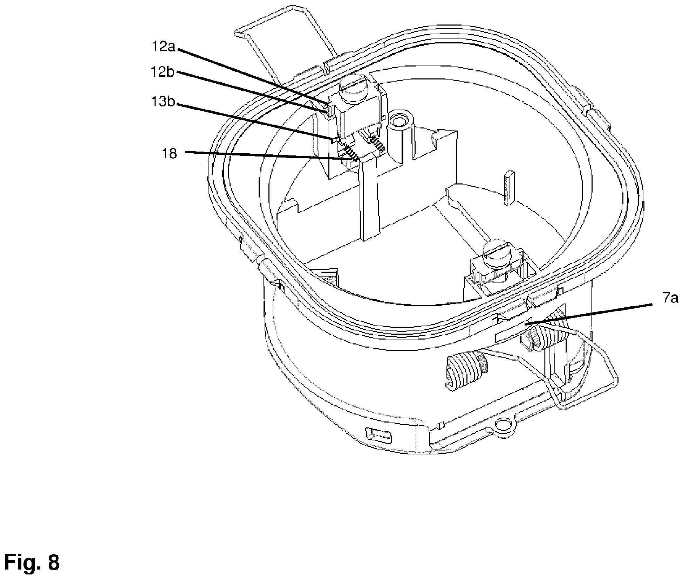

Weiterhin können gemäß der Darstellung von Fig. 8 federelastische Mittel 18 zum Rückstellen der Klemmelemente 5 vorgesehen sein, welche als lediglich schematisch angedeutete Zugfedern ausgestaltet sein können, die mit ihrem einen Ende am Klemmelement 6 und mit ihrem anderen Ende im Innenraum des ersten Gehäuseabschnitts 8a befestigt sind.

Wie den Darstellungen der Figuren 1 bis 9 weiterhin entnommen werden kann, sind innerhalb des ersten Gehäuseabschnitts 8a insgesamt jeweils zwei axiale und radiale Führungen 12, 13 mit darin verschiebbar aufgenommenen Verschiebe- und Klemmelementen 5, 6 vorgesehen, welche identisch ausgebildet sind und diametral zueinander am ersten Gehäuseabschnitt 8a angeordnet sind.

Nachfolgend wird noch einmal die Arbeitsweise des erfindungsgemäßen Installationsgerätes bei der Montage und Demontage beschrieben.

Nachdem das Installationsgerät über die Spreizarme 9 an der Decke 11 vormontiert ist, werden die Schraubelemente 4 vom Außenraum 17 der Decke 11 im Uhrzeigersinn gedreht. Die Schrauben 4 sind dabei mit ihren Gewindeenden in die in Fig. 9a angedeuteten Innengewinde der Halteelemente 7 eingeschraubt. Durch Drehen im Uhrzeigersinn bewegen sich die Schrauben 4 in Richtung der Halteelemente 7 und bewegen über die an den Verschiebeelementen 5 anliegenden Schraubenköpfe die Verschiebeelemente 5 in axialer Richtung in das Gehäuse 8 hinein. Die Verschiebeelemente 5 drücken bei ihrer Bewegung die Klemmelemente 6 über die geneigt angeordneten, aneinander anliegenden Geitflächen 5a und 6a nach außen. Bei der Bewegung verhindern die axiale Führungen 12, dass sich die Verschiebeelemente 5 in radialer Richtung verschieben können; und die horizontalen Führungen 13 verhindern, dass sich die Klemmelemente 6 in axialer Richtung verschieben können. Die Schraubelemente 4 werden solange gedreht, bis sich die Klemmelemente 6 in der Öffnung 15 kraftschlüssig oder formschlüssig an die innere Umfangsfläche der Öffnung angelegt haben. Durch die kraftschlüssige/formschlüssige Verbindung der Klemmelemente 6 in der Öffnung 15 wird es hierbei ermöglicht, dass eine erhöhte Kraft auf das Installationsgerät ausgeübt werden muss, um dieses aus der Decke 11 herauszudrücken.

Für die Demontage des Installationsgerätes werden die Schraubelemente 4 entgegengesetzt zum Uhrzeigersinn gedreht, wodurch die kraftschlüssige/ formschlüssige Verbindung zwischen den Klemmelementen 6 und der Innenumfangsfläche der Öffnung 15 aufgehoben wird. Durch seitliches Hin- und Herbewegen des Gehäuses 8 in der Öffnung 15 können die Klemmelemente 6 hierbei gelöst und durch Rotieren des Gehäuses in der Öffnung wieder in die Einführposition zurück bewegt werden. Das Zurückbewegen der Klemmelemente 6 kann dabei durch die in Fig. 8 gezeigten federelastischen Rückstellmittel 18 unterstützt werden. Somit ist es möglich das Installationsgerät wieder mit weniger Kraft aus der Decke 11 herauszuziehen.

### Bezugszeichenliste

- 1: Designelement
- 2: Befestigungselement / Blendrahmen für
- 3: Abdeckkappe/Linse
- 4: Schraubelement
- 5: Verschiebeelement
- 5a: Gleitfläche an Verschiebeelement
- 5b: Bohrung in Verschiebeelement
- 6: Klemmelement
- 6a: Gleitfläche an Klemmelement
- 6b: Ausnehmung in Gleitfläche des Klemmelements
- 7: Halteelement mit Innengewindebohrung für Schraubelement
- 7a: radiale Ausnehmung in Gehäuse für Halteelement
- 8: Gehäuse
- 8a: erster in Öffnung einschiebbarer Gehäuseabschnitt
- 8b: zweiter flanschartiger Gehäuseabschnitt
- 9: federbelasteter Spreizarm
- 10: Zugentlastung
- 11: Decke
- 12: axiale Führung
- 12a: Vorsprünge an Verschiebeelement
- 12b: Nuten der axialen Führung
- 13: radiale Führung
- 13a: Vorsprünge an Klemmelement
- 13b: Nuten der radialen Führung in Gehäusewand
- 13c: Anschlag am Klemmelement
- 15: Loch / Öffnung in Decke
- 16: Innenraum der Decke
- 17: Außenraum der Decke
- 18: federelastische Mittel/Rückstellfeder für Klemmelemente

## Patentansprüche

1. Installationsgerät zur Montage in einer Öffnung (15) einer aus plattenförmigem Werkstoff gebildeten Decke (11) eines Gebäudes, mit einem Gehäuse (8), welches einen ersten, in die Öffnung (15) einschiebbaren Gehäuseabschnitt (8a) und einen zweiten, außerhalb der Öffnung (15) angeordneten flanschartigen Gehäuseabschnitt (8b) aufweist, welcher einen größeren Durchmesser als der Öffnung (15) besitzt und welcher nach dem Einschieben bündig mit der Unterseite der Decke (11) in Anlage bringbar ist, sowie mit im Bereich des ersten Gehäuseabschnitts (8a) angeordneten federbelasteten Spreizarmen (9), die durch federelastische Mittel aus einer radial innenliegenden Einführposition in eine radial erweiterte Spreizposition gedrängt werden,
**dadurch gekennzeichnet, dass** der erste Gehäuseabschnitt (8a) eine erste radiale Führung (13) umfasst, in der ein Klemmelement (6) in radialer Richtung aus einer ersten, radial innenliegenden Freigabeposition in eine zweite radial außenliegende Klemmposition verschiebbar aufgenommen ist, dass das Gehäuse (8) eine zweite axiale Führung (12) aufweist, in welcher ein Verschiebeelement (5) über ein auf dieses wirkendes Schraubelement (4) in axialer Richtung verschiebbar aufgenommen ist, und dass am Klemmelement (6) eine im Winkel zur Bewegungsrichtung des Verschiebeelements (5) geneigte Gleitfläche (6a) und/oder am Versschiebeelement (5) eine im Winkel zur Bewegungsrichtung des Verschiebeelements (5) geneigte Gleitfläche (5a) geformt ist, über welche eine vom Schraubelement (4) auf das Verschiebeelement (5) ausgeübte Kraft in das Klemmelement (6) eingeleitet wird, um dieses bei einer Bewegung des Verschiebeelements (5) in der radialen Führung (13) aus der Freigabeposition in die Klemmposition zu verschieben.

2. Installationsgerät nach Anspruch 1,
**dadurch gekennzeichnet, dass** die Gleitfläche (6a) am Klemmelement (6) geformt ist, und dass in der ersten Gleitfläche (6a) eine Ausnehmung (6b) geformt ist, durch die sich das Schraubelement (4) hindurch erstreckt.

3. Installationsgerät nach Anspruch 2,
**dadurch gekennzeichnet, dass** die Ausnehmung (6b) zum Zentrum des ersten Gehäuseabschnitts (8a) hin offen ist.

4. Installationsgerät nach einem der vorhergehenden Ansprüche,
**dadurch gekennzeichnet, dass** die radiale Führung (13) zwei in der Außenwand des ersten Gehäuseabschnitts (8a) geformte radiale Nuten (13b) besitzt, die sich in radialer Richtung erstrecken und in die zwei auf einander gegenüber liegenden Seiten des Klemmelements (6) angeordnete Vorsprünge (13a) eingreifen, die sich vorzugsweise über einen Großteil der Länge des Klemmelements (6) erstrecken.

5. Installationsgerät nach einem der vorhergehenden Ansprüche,
**dadurch gekennzeichnet, dass** der Anschlag (13c) am Klemmelement (6) ein Herausfallen in Radialer Richtung verhindert.

6. Installationsgerät nach einem der Ansprüche 1 bis 5,
**dadurch gekennzeichnet, dass** das Klemmelement (6) durch federelastische Mittel (18) aus der zweiten Klemmposition in die erste Freigabeposition gedrängt wird.

7. Installationsgerät nach einem der vorhergehenden Ansprüche,
**dadurch gekennzeichnet, dass** eine Gleitfläche (6a) am Klemmelement (6) und eine an dieser anliegende Gleitfläche (5a) am Verschiebeelement (5) geformt ist.

8. Installationsgerät nach Anspruch 7,
**dadurch gekennzeichnet, dass** die Gleitfläche (6a) des Klemmelements (6) und die Gleitfläche (5a) des Verschiebeelements (5) aufeinander abgestimmte Neigungen relativ zur Bewegungsrichtung des Verschiebeelements (5) besitzen, wobei die Summe der Neigungswinkel zusammen vorzugsweise 90° beträgt.

9. Installationsgerät nach einem der vorhergehenden Ansprüche,
**dadurch gekennzeichnet, dass** die axiale Führung (12) zwei in der Wand der axialen Führung (12) geformte axiale Nuten (12b) besitzt, die sich in axialer Richtung erstrecken und in die zwei auf einander gegenüber liegenden Seiten des Verschiebeelements (5) angeordnete Vorsprünge (12a) eingreifen, die sich vorzugsweise über einen Großteil der Länge des Verschiebeelements (5) erstrecken.

10. Installationsgerät nach Anspruch 8 oder 9,
**dadurch gekennzeichnet, dass** in der Gleitfläche (5a) des Verschiebeelements (5) eine sich in axialer Richtung des ersten Gehäuseabschnitts (8a) erstreckende Bohrung (5b) geformt ist, durch die sich das Schraubelement (4) hindurch erstreckt.

11. Installationsgerät nach einem der vorhergehenden Ansprüche,
**dadurch gekennzeichnet, dass** das Schraubelement (4) mit seinem freien Gewindeabschnitt in den Innengewindeabschnitt, beispielsweise eines in der Aufsicht polygonalen, bevorzugt rechteckigen Halteelements (7) eingreift, welches bevorzugt in einer in der Außenwand des ersten Gehäuseabschnitts (8a) geformten radialen Ausnehmung (7a) verdrehsicher aufnehmbar ist.

12. Installationsgerät nach einem der vorhergehenden Ansprüche,
**dadurch gekennzeichnet, dass** der erste Gehäuseabschnitt (8a) eine der radialen Führung (13) diametral gegenüberliegende weitere radiale Führung (13), in der ein weiteres Klemmelement (6) in radialer Richtung verschiebbar aufgenommen ist, eine, mit der weiteren radialen Führung (13) kommunizierende weitere axiale Führung (12), in welcher ein weiteres Verschiebeelement (5) über ein auf dieses wirkendes weiteres Schraubelement (4) in axialer Richtung verschiebbar aufgenommen ist, sowie eine am weiteren Klemmelement (6) und/oder am weiteren Versschiebeelement (5) im Winkel zur Bewegungsrichtung des weiteren Verschiebeelements (5) geneigt angeordnete weitere Gleitfläche (5a, 6a) umfasst, über welche eine vom weiteren Schraubelement (4) auf das weitere Verschiebeelement (5) ausgeübte Kraft in das weitere Klemmelement (6) eingeleitet wird, um dieses bei einer Bewegung des Verschiebeelements (5) in der ersten radialen Führung (13) aus der Freigabeposition in die Klemmposition zu verschieben.

## Claims

1. Installation device for mounting in an opening (15) of a ceiling (11), which is formed of panel-shaped material, of a building, having a housing (8) which has a first housing portion (8a) which can be inserted into the opening (15) and a second, flange-like housing portion (8b) which is arranged outside the opening (15) and which has a larger diameter than the opening (15) and which can be brought into flush contact with the underside of the ceiling (11) after insertion, and having spring-loaded spreading arms (9) which are arranged in the region of the first housing portion (8a) and which are urged from a radially inner insertion position into a radially widened spreading position by spring-elastic means,
**characterized in that** the first housing portion (8a) comprises a first radial guide (13) in which a clamping element (6) is received so as to be displaceable in the radial direction from a first, radially inner release position into a second, radially outer clamping position, **in that** the housing (8) has a second axial guide (12) in which a displacement element (5) is received so as to be displaceable in the axial direction by means of a screw element (4) acting thereon, and **in that** a sliding face (6a) inclined at an angle to the direction of movement of the displacement element (5) is formed on the clamping element and/or a sliding face (5a) inclined at an angle to the direction of movement of the displacement element (5) is formed on the displacement element (5), via which sliding face a force exerted by the screw element (4) on the displacement element (5) is introduced into the clamping element (6) in order to displace it in the radial guide (13) from the release position into the clamping position during a movement of the displacement element (5).

2. Installation device according to Claim 1,
**characterized in that** the sliding face (6a) is formed on the clamping element (6), and **in that** a recess (6b), through which the screw element (4) extends, is formed in the first sliding face (6a).

3. Installation device according to Claim 2,
**characterized in that** the recess (6b) is open towards the centre of the first housing portion (8a).

4. Installation device according to one of the preceding claims,
**characterized in that** the radial guide (13) has two radial grooves (13b) which are formed in the outer wall of the first housing portion (8a) and which extend in the radial direction and in which there engage two projections (13a) which are arranged on mutually opposite sides of the clamping element (6) and which preferably extend over a large part of the length of the clamping element (6).

5. Installation device according to one of the preceding claims,
**characterized in that** the stop (13c) on the clamping element (6) prevents a falling-out in the radial direction.

6. Installation device according to one of Claims 1 to 5,
**characterized in that** the clamping element (6) is urged from the second clamping position into the first release position by spring-elastic means (18).

7. Installation device according to one of the preceding claims,
**characterized in that** a sliding face (6a) is formed on the clamping element (6) and a sliding face (5a), which bears on said sliding face (6a), is formed on the displacement element (5).

8. Installation device according to Claim 7, **characterized in that** the sliding face (6a) of the clamping element (6) and the sliding face (5a) of the displacement element (5) have inclinations relative to the direction of movement of the displacement element (5) that are tailored to one another, wherein the sum of the angles of inclination together is preferably 90°C.

9. Installation device according to one of the preceding claims,
**characterized in that** the axial guide (12) has two axial groves (12b) which are formed in the wall of the axial guide (12) and which extend in the axial direction and in which there engage two projections (12a) which are arranged on mutually opposite sides of the displacement element (5) and which preferably extend over a large part of the length of the displacement element (5).

10. Installation device according to Claim 8 or 9,
**characterized in that** a bore (5b) which extends in the axial direction of the first housing portion (8a) and through which the screw element (4) extends is formed in the sliding face (5a) of the displacement element (5) .

11. Installation device according to one of the preceding claims,
**characterized in that** the screw element (4) engages by way of its free thread portion in the internal thread portion, for example of a retaining element (7) which, as seen in plan view, is polygonal, preferably rectangular, and which can preferably be received in a rotationally secure manner in a radial aperture (7a) formed in the outer wall of the first housing portion (8a) .

12. Installation device according to one of the preceding claims,
**characterized in that** the first housing portion (8a) comprises, diametrically opposite to the radial guide (13), a further radial guide (13) in which a further clamping element (6) is received so as to be displaceable in the radial direction, a further axial guide (12) which communicates with the further radial guide (13) and in which a further displacement element (5) is received so as to be displaceable in the axial direction by means of a further screw element (4) acting thereon, and a further sliding face (5a, 6a) which is arranged inclined on the further clamping element (6) and/or on the further displacement element (5) so as to be arranged at an angle to the direction of movement of the further displacement element (5) and via which a force exerted on the further displacement element (5) by the further screw element (4) is introduced into the further clamping element (6) in order to displace it in the first radial guide (13) from the release position into the clamping position during a movement of the displacement element (5).

## Revendications

1. Appareil d'installation destiné au montage dans une ouverture (15) d'un plafond formé de matériau en forme de plaque (11) d'un bâtiment, avec un boîtier (8), qui présente une première partie de boîtier (8a) insérable dans l'ouverture (15) et une seconde partie de boîtier en forme de bride (8b) disposée à l'extérieur de l'ouverture (15), qui présente un plus grand diamètre que l'ouverture (15) et qui après l'insertion peut être placée en appui à fleur du côté inférieur du plafond (11), ainsi qu'avec des bras expansibles à ressort (9) disposés dans la région de la première partie de boîtier (8a), qui sont repoussés par des moyens de ressort élastiques d'une position d'insertion radialement intérieure à une position d'expansion radialement élargie,
**caractérisé en ce que** la première partie de boîtier (8a) comprend un premier guide radial (13), dans lequel un élément de serrage (6) est logé de façon déplaçable en direction radiale d'une première position de libération radialement intérieure à une deuxième position de serrage radialement extérieure, **en ce que** le boîtier (8) présente un deuxième guide axial (12), dans lequel un élément coulissant (5) est logé de façon coulissante en direction axiale au moyen d'un élément de vis (4) agissant sur lui, et **en ce qu'**une face de glissement (6a) inclinée d'un angle par rapport à la direction de mouvement de l'élément coulissant (5) est formée sur l'élément de serrage (6) et/ou une face de glissement (5a) inclinée d'un angle par rapport à la direction de mouvement de l'élément coulissant (5) est formée sur l'élément coulissant (5), par lesquelles une force exercée par l'élément de vis (4) sur l'élément coulissant (5) est introduite dans l'élément coulissant (5), afin de déplacer celui-ci de la position de libération à la position de serrage lors d'un mouvement de l'élément coulissant (5) dans le guide radial (13).

2. Appareil d'installation selon la revendication 1, **caractérisé en ce que** la face de glissement (6a) est formée sur l'élément de serrage (6), et **en ce qu'**un évidement (6b) est formé dans la première face de glissement (6a), à travers lequel s'étend l'élément de vis (4).

3. Appareil d'installation selon la revendication 2, **caractérisé en ce que** l'évidement (6b) est ouvert en direction du centre de la première partie de boîtier (8a).

4. Appareil d'installation selon l'une quelconque des revendications précédentes, **caractérisé en ce que** le guide radial (13) comporte deux rainures radiales (13b) formées dans la paroi extérieure de la première partie de boîtier (8a), qui s'étendent en direction radiale et dans lesquelles s'engagent deux saillies (13a) disposées sur des côtés opposés l'un à l'autre de l'élément de serrage (6), lesquelles s'étendent de préférence sur une grande partie de la longueur de l'élément de serrage (6).

5. Appareil d'installation selon l'une quelconque des revendications précédentes, **caractérisé en ce que** la butée (13c) sur l'élément de serrage (6) empêche une chute en direction radiale.

6. Appareil d'installation selon l'une quelconque des revendications 1 à 5, **caractérisé en ce que** l'élément de serrage (6) est repoussé par des moyens de ressort élastiques (18) de la deuxième position de serrage à la première position de libération.

7. Appareil d'installation selon l'une quelconque des revendications précédentes, **caractérisé en ce qu'**une face de glissement (6a) est formée sur l'élément de serrage (6) et une face de glissement (5a) appliquée sur celle-ci est formée sur l'élément coulissant (5).

8. Appareil d'installation selon la revendication 7, **caractérisé en ce que** la face de glissement (6a) de l'élément de serrage (6) et la face de glissement (5a) de l'élément coulissant (5) présentent des inclinaisons accordées l'une à l'autre par rapport à la direction de mouvement de l'élément coulissant (5), dans lequel la somme des angles d'inclinaison vaut ensemble de préférence 90°.

9. Appareil d'installation selon l'une quelconque des revendications précédentes, **caractérisé en ce que** le guide axial (12) comporte deux rainures (12b) formées dans la paroi du guide axial (12), qui s'étendent en direction axiale et dans lesquelles s'engagent deux saillies (12a) disposées sur des côtés opposés l'un à l'autre de l'élément coulissant (5), lesquelles s'étendent de préférence sur une grande partie de la longueur de l'élément coulissant (5).

10. Appareil d'installation selon la revendication 8 ou 9, **caractérisé en ce qu'**un perçage (5b) s'étendant en direction axiale de la première partie de boîtier (8a) et à travers lequel s'étend l'élément de vis (4), est formé dans la face de glissement (5a) de l'élément coulissant (5).

11. Appareil d'installation selon l'une quelconque des revendications précédentes, **caractérisé en ce que** l'élément de vis (4) s'engage avec sa partie filetée libre dans la partie filetée intérieure, par exemple d'un élément de maintien (7) polygonal, de préférence rectangulaire vu en élévation, qui peut être logé sans rotation de préférence dans un évidement radial (7a) formé dans la paroi extérieure de la première partie de boîtier (8a).

12. Appareil d'installation selon l'une quelconque des revendications précédentes, **caractérisé en ce que** la première partie de boîtier (8a) comprend un autre guide radial (13) diamétralement opposé au guide radial (13), dans lequel un autre élément de serrage (6) est logé de façon déplaçable en direction radiale, un autre guide axial (12) communiquant avec l'autre guide radial (13), dans lequel un autre élément coulissant (5) est logé de façon coulissante en direction axiale au moyen d'un autre élément de vis (4) agissant sur lui, ainsi qu'une autre face de glissement (5a, 6a) disposée sur l'autre élément de serrage (6) et/ou sur l'autre élément coulissant (5) inclinée d'un angle par rapport à la direction de mouvement de l'autre élément coulissant (5), par lesquelles une force exercée sur l'autre élément coulissant (5) par l'autre élément de vis (4) est introduite dans l'autre élément de serrage (6), afin de déplacer celui-ci de la position de libération à la position de serrage lors d'un mouvement de l'élément coulissant (5) dans le premier guide radial (13).
